Europäisches Patentamt

European Patent Office

Office européen des brevets

(11) Veröffentlichungsnummer: **0 081 826**
**B1**

(12) # EUROPÄISCHE PATENTSCHRIFT

(45) Veröffentlichungstag der Patentschrift:
**11.05.88**

(21) Anmeldenummer: **82111458.4**

(22) Anmeldetag: **10.12.82**

(51) Int. Cl.⁴: **F 16 T 1/00**

(54) **Vorrichtung zum Ableiten von Kondensat und dergleichen aus Drucksystemen.**

(30) Priorität: **16.12.81 DE 3149830**

(43) Veröffentlichungstag der Anmeldung:
**22.06.83 Patentblatt 83/25**

(45) Bekanntmachung des Hinweises auf die Patenterteilung:
**11.05.88 Patentblatt 88/19**

(84) Benannte Vertragsstaaten:
**AT BE CH DE FR GB IT LI NL SE**

(56) Entgegenhaltungen:
**EP - A - 0 028 582**
**DE - B - 1 172 565**
**FR - A - 2 082 631**
**FR - A - 2 234 512**
**GB - A - 1 419 697**
**GB - A - 2 074 702**
**US - A - 3 905 385**
**US - A - 3 916 936**

(73) Patentinhaber: **Koch, Berthold, Gartenstrasse 6,**
**D-5963 Wenden 3 Hünsborn (DE)**

(72) Erfinder: **Müller-Falkenberg, Konrad, Eickelscheidt 15,**
**D-4030 Ratingen-Hösel (DE)**

(74) Vertreter: **Gille, Christian, Dipl.-Ing. et al, Türk, Gille +**
**Hrabal Patentanwälte Bruckner Strasse 20,**
**D-4000 Düsseldorf 13 (DE)**

### Beschreibung

Die Erfindung betrifft eine Vorrichtung zum Ableiten von Kondensat und dergleichen aus Drucksystemen wie Druckgas- und Dampfsystemen mit den Merkmalen des Oberbegriffes des Patentanspruches 1.

Gase können in geringen Mengen Verunreinigungen wie kondensierbare Flüssigkeiten und Öle enthalten, die als Kondensat schwerer als das Gas sind und sich daher vom Gas trennen und nach unten abgeführt werden. Auch Dampf scheidet Kondensat ab, der schwerer als der Dampf ist und gesammelt und abgeführt werden kann. In Druckgas- und Dampfsystemen wird das Kondensat gesammelt und von Zeit zu Zeit abgeleitet.

Es ist bisher schwierig gewesen, stark verunreinigtes Kondensat, welches Rostabrieb aus Leitungssystemen, Behältern, verkrackte Öle und sonstige Verunreinigungen enthält, aus Drucksystemen vollautomatisch abzulassen. Bei einer bekannten Vorrichtung der eingangs genannten Gattung (DE-C 827 873) sind ein mechanisch beweglicher Schwimmer und ein Auslassventil mit axial verschiebbarem Ventilkörper vorgesehen, um das Ventil zu öffnen, wenn der Flüssigkeitsspiegel des in einem Sammelbehälter befindlichen Kondensats den Schwimmer über eine bestimmte Höhe angehoben hat. Eine pneumatische Vorsteuerung des Auslassventils wird durch einen mit dem Schwimmer verbundenen Drehschieber bewirkt, der jedoch störanfällig ist, wenn er mit dampfförmigem Medium beaufschlagt wird. Weiterhin ist es nachteilhaft, dass der Drehschieber keine eindeutig definierten Ventilstellungen ermöglicht, so dass im Übergangsbereich keine reproduzierbaren Schaltpositionen des Auslassventils eingehalten werden können. Hinzu kommt, dass die für die Steuerung vorgesehenen feinen Leitungen für stark verschmutztes Kondensat ungeeignet sind, weil Ablagerungen desselben die Leitungen verengen oder ganz verstopfen können. Deshalb ist es erforderlich, für das Steuermedium eine andere Leitung als für das Kondensat vorzusehen. Eine weitere Fehlerquelle ist in der Lagerung des Schwimmers und der Führung des Ventilkörpers zu erblicken. Hinzu kommt, dass die vom Auftrieb des Schwimmers abgeleitete Öffnungskraft begrenzt und verhältnismässig gering ist, so dass nur kleine Schliesskörper bewegt und dementsprechend nur kleine Öffnungsquerschnitte für das abzulassende Kondensat beherrscht werden können und schon geringe Verunreinigungen zur Verstopfung des Öffnungsquerschnittes führen, selbst wenn das Steuermedium durch eine einen zusätzlichen Aufwand bedeutende besondere Leitung zugeführt wird.

Eine weitere bekannte Vorrichtung zum Ableiten von Dampfwasser (DE-C 328 523) mit einem von einem Schwimmer gesteuerten Auslassventil hat ähnliche Nachteile, weil die durch den Auftrieb vom Schwimmer gelieferte Kraft zum Lüften des Ventilkörpers selbst dann verhältnismässig gering ist, wenn eine Übersetzung eingebaut würde, so dass auch nur kleine Öffnungsquerschnitte am Ventil vorgesehen werden können, die sich von in dem abzuleitenden Wasser befindlichen Verunreinigungen schnell zusetzen können.

Der Erfindung liegt die Aufgabe zugrunde, eine Vorrichtung zum Ableiten von Kondensat und dergleichen aus Drucksystemen zu schaffen, in welcher sich das Kondensat sammelt und ohne unerwünschte Verluste des Druckmediums und ohne ständige Überwachung vollautomatisch bei störungsfreiem Betrieb abfliessen kann, wobei für die Steuerung auf ein bewegliches Teil wie einen schwenkbar gelagerten Schwimmer verzichtet werden kann.

Diese Aufgabe wird erfindungsgemäss mit einer Vorrichtung mit den Merkmalen des Patentanspruches 1 gelöst. Vorteilhafte Ausgestaltungen der Erfindung sind Gegenstand der Unteransprüche.

Dadurch, dass bei der erfindungsgemässen Vorrichtung als Füllstandsmesser elektronische Steuersignale liefernde feststehende Fühler benutzt werden, kann auf eine mechanische Steuerung mit Hilfe von Schwimmern verzichtet werden, wodurch man nicht nur die Nachteile der bekannten Schwimmersteuerungen vermeiden, sondern auch sehr genau die Öffnungspositionen für das Auslassventil einstellen und einhalten kann. Dementsprechend wird mit Sicherheit vermieden, dass beim Ablassen des Kondensats Druckgas oder Dampf mit entweichen können. Andererseits ist es aber auch möglich, die Vorrichtung so einzustellen, dass beim Ablassen des Kondensats auch etwas Druckmedium ausströmt, nachdem das Kondensat unter einen bestimmten Pegel abgesunken ist, um eventuell sich auf den Dichtungsflächen und in der Auslassöffnung des Auslassventils absetzende Verunreinigungen abzublasen, bevor das Auslassventil wieder schliesst.

Sind mehrere Fühler als Füllstandsmesser vorgesehen, so können diese unterschiedlich tief in den Sammelbehälter für das Kondensat hineinragen, um die Umsteuerpositionen genau zu definieren. Sind die Fühler in der Seitenwand des Sammelbehälters eingelassen, lassen sich dieselben in der jeweils gewünschten Höhe im Sammelbehälter anordnen.

Sind die Fühler an einen Verstärker angeschlossen und mit einer Zeitverzögerungsschaltung verknüpft, welche das vom Steuersignal geöffnete Auslassventil nach einer vorgegebenen Zeitspanne wieder schliesst, genügt für die Steuerung ein einziger Fühler, wenngleich es zweckmässig sein kann, auch mit mehreren Fühlern zu arbeiten. In jedem Falle ist das Schliessen des Auslassventils vorgegeben, so dass Fehlsteuerungen zu vermeiden sind.

Nach einem weiteren Merkmal der Erfindung kann im Sammelbehälter ein elektronisch arbeitender Alarmfühler angeordnet sein, der bei Kontakt mit der im Sammelbehälter hochsteigenden Flüssigkeit ein Alarmsignal auslöst und gegebenenfalls auch das Öffnen des Auslassventils bewirkt, nämlich dann, wenn dieses bei einem Ausfall der normalen Störung durch die hierfür vorgesehenen anderen Fühler sich nicht geöffnet haben sollte.

Besonders zweckmässig ist es, wenn die Fühler kapazitiv arbeiten, d.h. auf kapazitivem Wege Steuer- und Alarmsignale liefern. Eine andere Möglichkeit besteht jedoch darin, die Fühler durch elektronische Leitfähigkeit der Flüssigkeit (Kondensat) Steuer- und Alarmsignale liefern zu lassen.

Um zu verhindern, dass sich im Bereich der zum Auslassventil führenden Öffnung des Sammelbehälters stärkere Turbulenzen ergeben, die zu Fehlern führen können, ist es vorteilhaft, vor der zum Auslassventil führenden Auslassöffnung im Sammelbehälter ein Abdeckblech anzuordnen.

Das Auslassventil kann beispielsweise ein vom Druck des im Drucksystem befindlichen Gases oder Dampfes zu steuerndes Ventil sein, beispielsweise ein Membranventil, dessen Membran mit der flächenmässig grösseren Aussenseite eine Kammer begrenzt, an die eine zu entlüftende Druckleitung angeschlossen ist. Ist diese Druckleitung entlüftet, öffnet sich das Membranventil, bis die Druckleitung wieder unter Druck gesetzt wird. Die Druckleitung kann dabei aus dem oberen Ende des Sammelbehälters herausgeführt sein, so dass sie also mit dem im Drucksystem herrschenden Druck gespeist wird und daher keine weitere Druckmittelquelle erforderlich ist.

Zusätzlich kann auch eine zweite Alarmsteuerung vorgesehen sein. Diese überwacht durch Endschalter das Schliessen des Auslassventils. Wenn das Ventil schliessen soll, jedoch aus irgendwelchen Gründen tatsächlich nicht schliesst, wird ein Alarmkontakt geschlossen und dementsprechend ein Alarm ausgelöst. Diese Funktion kann auch durch einen Drucksensor in der Auslaufleitung für das Kondensat erzielt werden, welcher Alarm auslöst, wenn nach erfolger Schliessung des Ventils in der Auslaufleitung noch ein Überdruck gemessen wird, der eine mangelhafte Schliessung des Ventils anzeigt.

In der Zeichnung sind zwei Ausführungsbeispiele der erfindungsgemässen Vorrichtung schematisch dargestellt, und zwar zeigt

Fig. 1 einen senkrechten Schnitt durch einen Sammelbehälter, wobei die Steuerelemente schematisch angedeutet sind, und

Fig. 2 einen senkrechten Schnitt durch eine abgewandelte Ausführungsform eines Sammelbehälters.

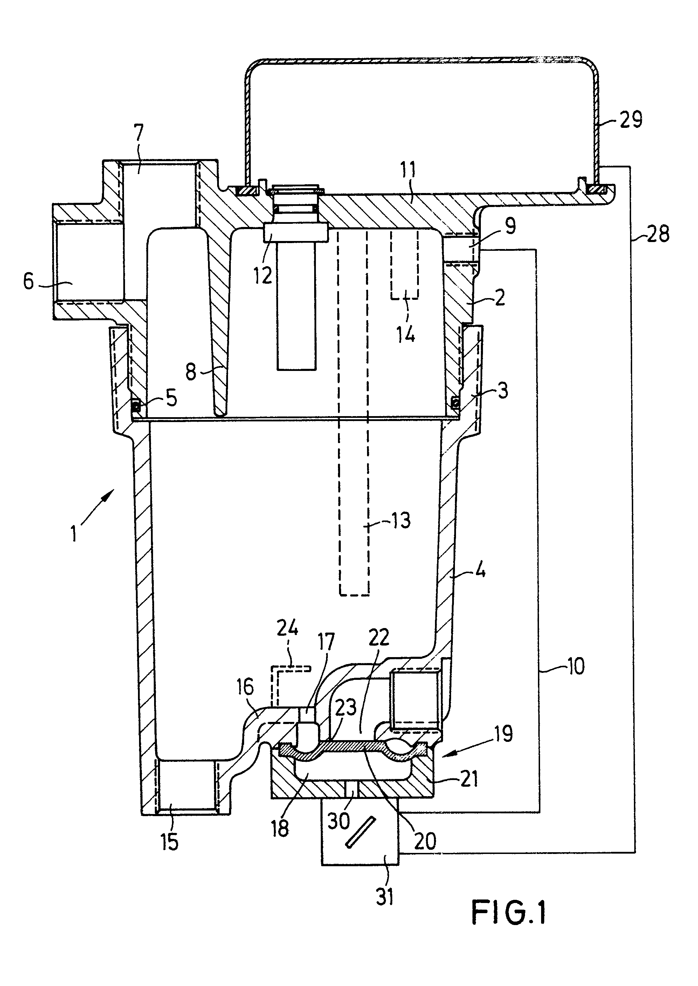

Der in Fig. 1 dargestellte Sammelbehälter 1 hat ein zweiteiliges Gehäuse, dessen Oberteil 2 in das obere Ende 3 des Unterteiles 4 eingesteckt ist, wobei eine Dichtung 5 in Form eines O-Ringes für eine dichte Verbindung sorgt.

Das Oberteil 2 enthält zwei rechtwinklig zueinanderverlaufende Einlassstutzen 6 und 7, von denen einer an ein Drucksystem wie beispielsweise eine Druckgasleitung oder eine Dampfleitung angeschlossen werden kann, während der andere Stutzen beispielsweise mittels eines nicht dargestellten Stopfens verschlossen gehalten wird. In das Oberteil 2 ragt eine Prallwand 8 hinein, die gewährleistet, dass das durch den Stutzen 6 und 7 herangeführte Druckmedium und Kondensat nach unten in das Unterteil 4 des Gehäuses 1 gelangt und das Kondensat im übrigen Teil des Oberteiles 2 hochsteigen muss, wenn der Kondensatspiegel über die Unterkante der Prallwand 8 ansteigt.

Das Oberteil 2 enthält an der dem Einlassstutzen 6 gegenüberliegenden Seite eine Öffnung 9, an die eine Druckleitung 10 angeschlossen werden kann, deren Funktion weiter unten beschrieben wird.

In die Abdeckwand 11 des Oberteiles 2 ist ein stabförmiger Fühler 12 druckdicht eingesetzt, der benutzt wird, um den Sammelbehälter 1 zu entleeren, wenn in ihm angesammeltes Kondensat einen gewissen Pegel erreicht hat oder überschreitet. Ein weiterer, in seiner Funktion ähnlicher, jedoch längerer Fühler 13 kann in gleicher Weise in die Abdeckwand 11 eingesetzt werden. Schliesslich ist ein dritter Fühler 14 angedeutet, der als Alarmgeber dient.

Das Unterteil 4 des Sammelbehälters 1 enthält am tiefsten Punkt eine normalerweise geschlossen gehaltene Auslauföffnung 15, die nur zu Reinigungszwecken geöffnet wird. Ausserdem befindet sich im Boden 16 des Unterteils 4 eine Auslassöffnung 17, die in eine Kammer 18 eines Membranventils 19 führt. Das Membranventil 19 enthält eine Membran 20, die vom Deckel 21 festgeklemmt wird und vor einer Auslassöffnung 22 liegt, gegen deren Rand 23 sie dichtend gedrückt wird, wenn in der Kammer 18 der Druck des Systems herrscht, wie nachstehend im einzelnen erläutert wird.

Oberhalb der Öffnung 17 ist am Boden 16 des Unterteils 4 ein Abdeckblech 24 angedeutet, das eine Verwirbelung der im Sammelbehälter 1 befindlichen Flüssigkeit vor dem Membranventil 19 und damit einen Sog beim Auslaufen der Flüssigkeit verhindern soll.

Am Ende der Druckleitung 10 ist ein Dreiwege-Magnetventil 31 angeordnet, das in seiner Ruhestellung eine Verbindung von der Öffnung 9 zu einer Öffnung 30 im Deckel 21 des Membranventils 19 der Kammer 18 herstellt. Daher herrscht dann in der Kammer 18 derselbe Druck wie im Sammelbehälter 1, d.h. der Druck des Systems, so dass die Membran 20 fest auf den Sitz 23 gedrückt wird, weil der auf die Oberseite der Membran einwirkende gesamte Druck wegen der geringeren Einwirkungsfläche kleiner als der auf deren Unterseite insgesamt einwirkende Druck ist.

Um das Membranventil 19 zu öffnen und Flüssigkeit aus dem Sammelbehälter 1 durch den Auslass 22 ausströmen zu lassen, muss der in der Kammer 18 herrschende Druck abgebaut werden. Zu diesem Zweck wird der Schliesskörper des Ventils 31 unter Spannung verschoben, um die dritte Öffnung des Ventils in die Atmosphäre zu öffnen und somit die Druckleitung 10 und die Kammer 18 zu entlüften. Da jetzt in der Kammer 18 praktisch kein Überdruck mehr herrscht, wird die Membran 20 von ihrem Sitz 23 von der auf ihre Oberseite drückenden, im Sammelbehälter 1 befindlichen Flüssigkeit gelüftet, so dass die Flüssigkeit auslaufen kann. Ist der Flüssigkeitsspiegel im Sammelbehälter 1 genügend weit abgesunken, wird das durch elektrische Kabel 28 herangeführte, das Lüften des Ventils 31 bewirkende Steuersignal unterbrochen, so dass der Schliesskörper des Ventils 31 in seine Ruhestellung zurückkehrt und die Kammer 18 wieder durch die Druckleitung 10 unter den an der Öffnung 9 herrschenden Druck des Systems gesetzt wird. Dadurch wird die Membran 20 wieder in die in Fig. 1 dargestellte Schliesslage auf den Sitz 23 gedrückt.

Die in Fig. 1 gezeigte Vorrichtung arbeitet folgendermassen:

Wenn nur ein einziger Fühler 12 vorhanden ist, löst dieser ein Steuersignal aus, welches zum Lüften des Leitungsabschnittes 10a und dadurch zum Entspannen der Druckkammer 18 führt, sobald der Flüssigkeitsspiegel im Gehäuse 1 so weit angestiegen ist, dass er das untere Ende des Fühlers 12 erreicht hat. Das Membranventil 19 wird dann vom auf die Oberseite der Membran 20 wirkenden Druck geöffnet, so dass die im Gehäuse angesammelte Flüssigkeit durch den Auslass 22 abfliesst. Nach Ablauf einer einstellbaren Zeitspanne, welche vom Betriebsdruck im Gehäuse, vom offenen Querschnitt des Auslasses 22, der Viskosität der Flüssigkeit und einer eventuell gewünschten Reinigung des Ventiles mittels nach der Flüssigkeit ausströmenden Druckluft bzw. Gas oder Dampf abhängt, wird der Leitungsabschnitt 10a wieder unter Druck gesetzt, so dass das Membranventil 19 schliesst. Vielfach erfolgt das Schliessen des Membranventils 19 aber bereits, bevor das Gehäuse ganz von Flüssigkeit entleert ist.

Die Messung des Flüssigkeitsspiegels im Sammelbehälter 1 und die Steuerung des Ablaufes der dort angesammelten Flüssigkeit kann kapazitiv oder auch durch elektrische Leitfähigkeit erfolgen.

Wenn der Fühler die maximale Kondensathöhe signalisiert und kein Signalabfall erfolgt, weil die nachfliessende Kondensatmenge zu gross ist und dementsprechend sich der Sammelbehälter auch bei geöffnetem Ventil nicht entleert oder wenn das Ventil nicht öffnet bzw. verstopft ist, wird nach einer vorgegebenen Zeit ein Alarmkontakt geschlossen, beispielsweise wenn der Flüssigkeitsspiegel den Alarmfühler 14 erreicht. Dann kann Bedienungs- oder Überwachungspersonal geeignete Notmassnahmen treffen.

Ist die Vorrichtung aber mit zwei Fühlern 12 und 13 ausgestattet, die beispielsweise kapazitiv arbeiten, liefert der Fühler 12 das das Ventil öffnende Steuersignal, während der Fühler 13 das Schliesssignal abgibt, wenn an ihm keine Kapazität mehr registriert wird. Die Steuerung kann aber auch so erfolgen, dass das Ventil erst nach Ablauf einer einstellbaren Zeispanne nach Kapazitätsabfall am Fühler 13 schliesst. Auf diese Weise ist einerseits eine genauere Steuerung möglich, weil der Fühler 13 dichter am minimalen Füllstandspegel des Sammelbehälters 1 liegt. Andererseits lässt sich so auch in einfacher Weise das Ventil zu Reinigungszwecken mit Gas oder Dampf durchströmen, wenn die Flüssigkeit ausgelaufen ist und der Flüssigkeitsspiegel unter die Öffnung 17 gesunken ist.

Wenn das Ventil erst nach Ablauf einer gewissen Zeitspanne nach Absinken des Flüssigkeitsspiegels unter den zweiten Fühler schliessen soll, wird die Steuerung beispielsweise mittels einer elektronischen Rampe durchgeführt, um eine Einstellung auf unterschiedliche Drücke im Sammelbehälter überflüssig zu machen. In diesem Falle bestimmt die Auslaufzeit zwischen dem Augenblick, wenn der Flüssigkeitsspiegel unter das untere Ende des kürzeren Fühlers 12 sinkt, bis zu dem Augenblick, wenn der Flüssigkeitsspiegel unter das untere Ende des zweiten Fühlers 13 sinkt, die restliche Auslaufzeit, einfach dadurch, dass beide Zeitspannen gleich lang gewählt werden.

Obwohl beim dargestellten Ausführungsbeispiel der Steuerkasten 29 unmittelbar am Sammelbehälter 1 angebracht ist, kann er auch entfernt vom Sammelbehälter vorgesehen sein.

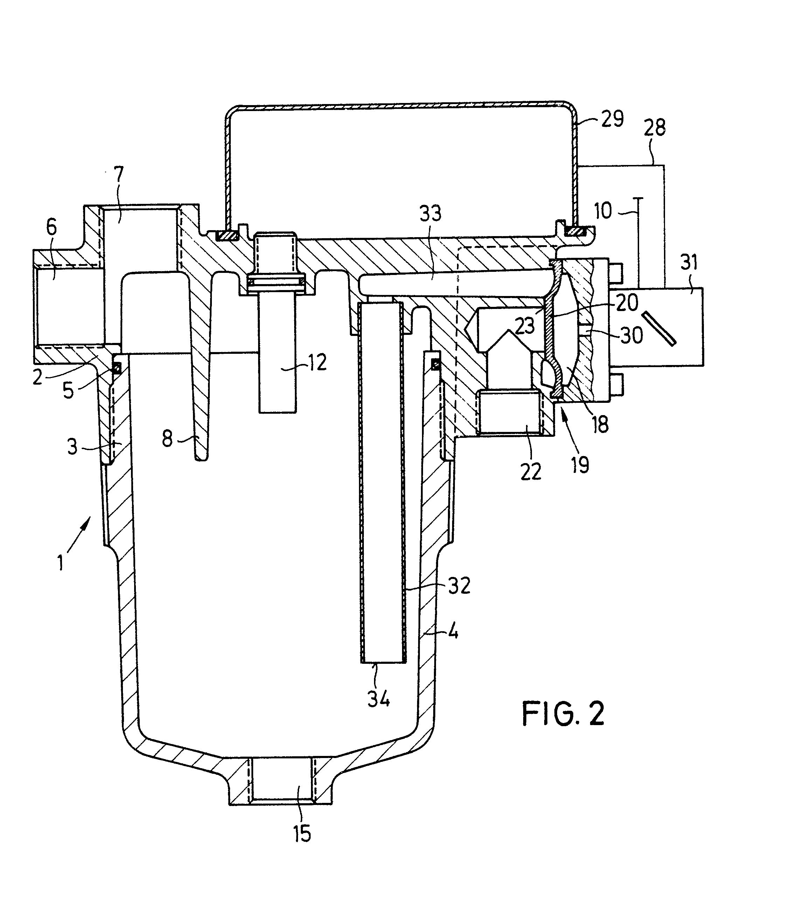

Beim Ausführungsbeispiel gemäss Fig. 2 ist der Sammelbehälter 1 ähnlich wie in Fig. 1 ausgebildet. Der wichtigste Unterschied liegt darin, dass das Membranventil 19 nicht am Unterteil 4, sondern am Oberteil 2 des Sammelbehälters 1 angeordnet ist. Dementsprechend ist im Sammelbehälter 1 ein nach unten offenes Steigrohr 32 vorgesehen, welches mit seinem oberen Ende in eine zum Membranventil 19 führende Bohrung 33 mündet. In diesem Falle bestimmt das untere Ende 34 den minimalen Flüssigkeitspegel im Sammelbehälter 1, denn der im Druckgas- oder Dampfsystem herrschende Gas- bzw. Dampfdruck kann Flüssigkeit durch das Steigrohr 32 nur zum Membranventil 19 und damit zum Auslass 22 drücken, wenn die Flüssigkeit nicht unter das untere Ende 34 des Steigrohres 32 abgesunken ist. Im übrigen erfolgt die Steuerung ebenso wie beim Ausführungsbeispiel gemäss Fig. 1. Dementsprechend sind gleiche Teile beider Ausführungsformen auch mit gleichen Positionsziffern bezeichnet.

Statt des Membranventils 19 kann auch ein direkt oder indirekt zu betätigendes Magnetventil am Auslass 22 vorgesehen sein. Auch andere Ventilarten sind verwendbar.

**Patentansprüche**

1. Vorrichtung zum Ableiten von Kondensat und dergleichen aus Drucksystemen wie Druckgas- und Dampfsystemen, mit einem an das Drucksystem anzuschliessenden Sammelbehälter (1) für das Kondensat, der mit zumindest einem Füllstandsmesser und einem von diesem automatisch gesteuerten, durch den Druck im Sammelbehälter betätigbaren Auslassventil (19) versehen ist, dessen Druckmittelantrieb auf der flächenmässig grösseren Aussenseite eine gasgefüllte Kammer begrenzt (18), wobei eine Druckleitung zum Verbinden des oberen, ständig gasgefüllten Teils des Sammelbehälters mit der Kammer zur Erzeugung des Schliessdruckes für das Auslassventil und ein zum Öffnen des Auslassventils ansteuerbares Dreiwege-Ventil (31) als Lüftungsventil für die Kammer vorgesehen ist, gekennzeichnet durch

a) elektronische Steuersignale liefernde Fühler (12, 13, 14) als Füllstandsmesser, die im Sammelbehälter (1) fest angeordnet sind,

b) eine an die Fühler angeschlossene elektronische Steuereinheit (29) zum Ansteuern des Lüftungsventils, das als Dreiwege-Magnetventil (31) ausgebildet ist,
und

c) die Anordnung des mit einem Membranantrieb versehenen Auslassventils (19) im oberen Bereich einer Seitenwand des Sammelbehälters (1) und eines unten offenen Steigrohres (32), über das das Auslassventil mit dem unteren Bereich des Sammelbehälters (1) verbunden ist
oder

d) die Anordnung des mit einem Membranantrieb versehenen Auslassventils (19) am Unterteil (4) des Sammelbehälters (1), das über eine Auslassöffnung (17) im Boden des Unterteils (4) mit dem unteren Bereich des Sammelbehälters (1) verbunden ist.

2. Vorrichtung nach Anspruch 1, dadurch gekennzeichnet, dass die Fühler (12, 13) von oben in den Sammelbehälter (1) hineinragen.

3. Vorrichtung nach Anspruch 2, dadurch gekennzeichnet, dass sie zwei unterschiedlich tief in den Sammelbehälter (1) hineinragende Fühler (12 und 13) aufweist.

4. Vorrichtung nach einem der Ansprüche 1 bis 3, dadurch gekennzeichnet, dass jeder Fühler (12, 13) an einen Verstärker angeschlossen und mit einer Zeitverzögerungsschaltung verknüpft ist, welche das vom Steuersignal geöffnete Auslassventil (19) nach einer vorgegebenen Zeitspanne wieder schliesst.

5. Vorrichtung nach Anspruch 4, dadurch gekennzeichnet, dass die Verzögerungszeit der Zeitverzögerungsschaltung einstellbar ist.

6. Vorrichtung nach einem der Ansprüche 1 bis 5, dadurch gekennzeichnet, dass ein Fühler (14) ein elektronisch arbeitender Alarmfühler ist, der bei Kontakt mit im Sammelbehälter (1) hochsteigender Flüssigkeit ein Alarmsignal auslöst und ein Öffnen des Auslassventils (19) bewirkt.

7. Vorrichtung nach einem der Ansprüche 1 bis 6, dadurch gekennzeichnet, dass die Fühler (12, 13, 14) kapazitiv Steuer- bzw. Alarmsignale erzeugen.

8. Vorrichtung nach einem der Ansprüche 1 bis 6, dadurch gekennzeichnet, dass die Fühler (12, 13, 14) durch elektrische Leitfähigkeit des angesammelten Kondensats Steuer- bzw. Alarmsignale erzeugen.

9. Vorrichtung nach einem der Ansprüche 1 bis 8, dadurch gekennzeichnet, dass im Sammelbehälter (1) vor der zum Auslassventil (19) führenden Auslassöffnung (17) ein Abdeckblech (24) angeordnet ist.

## Claims

1. An apparatus for removing condensate or the like from pressure systems like pressurized gas or steam systems, comprising an accumulator (1) for the condensate being connected to the pressure system and being provided with at least one meter sensing the liquid level and an outlet valve (19) being automatically controlled by said meter and being acted by the pressure within the accumulator, of which the pressure medium actuator defines a gas-filled chamber (18) on the outside having a larger area, whereby a pressure line is provided for connecting the upper part of the accumulator permanently filled with gas with the chamber for producing the closing pressure for the outlet valve and a three-way valve (31) as vent valve for the chamber which is controllable for the opening of the outlet valve, characterized by

a) sensors (12, 13, 14) as meters sensing the liquid level, delivering electronic controlling signals and being stationary within the accumulator (1),

b) a controlling unit (29) connected to the sensors for controlling the vent valve being formed as a three-way valve (31),
and

c) the arrangement of the outlet valve (19) comprising a diaphragma actuater in the upper part of a side wall of the accumulator (1) and of a riser (32) open at its lower end by which the outlet valve is connected with the lower portion of the accumulator (1),
or

d) the arrangement of the outlet valve (19) comprising a diaphragma actuator in the lower part (4) of the accumulator (1), which is connected to the lower portion of the accumulator (1) by an outlet part (17) in the bottom of the lower part (4).

2. The apparatus according to claim 1, characterized in that said sensors (12, 13) suspend from above into said accumulator (1).

3. The apparatus according to claim 2, characterized in that two sensors (12, 13) suspend from above into said accumulator (1) with different lengths.

4. The apparatus according to one of the claims 1 to 3, characterized in that each sensor (12, 13) is electrically connected to an amplifier and a time retarding circuit which closes said outlet valve (19) opened by said controlling signal after a certain period.

5. The apparatus according to claim 4, characterized in that the retarding time of said retarding circuit is adjustable.

6. The apparatus according to one of the claims 1 to 5, characterized in that one sensor (14) is an electronically operating warning sensor supplying a warning signal when contacted by the liquid rising within said accumulator (1) and opening said outlet valve.

7. The apparatus according to one of the claims 1 to 6, characterized in that said sensors (12, 13, 14) provide capacitively controlling and warning signals respectively.

8. The apparatus according to one of the claims 1 to 6, characterized in that said sensors (12, 13, 14) provide controlling and warning signals by means of the electric conductivity of the accumulated condensate.

9. The apparatus according to one of the claims 1 to 8, characterized in that a baffle (24) is provided within said accumulator (1) in front of the outlet part (17) to said outlet valve (19).

**Revendications**

1. Dispositif pour évacuer des condensats et similaires hors de systèmes sous pression tels que des systèmes à gaz sous pression et à vapeur, comportant un récipient (1) de collecte du condensat, devant être relié au système sous pression, qui est pourvu d'au moins un appareil de mesure de niveau de remplissage et d'une vanne de décharge (19), commandée automatiquement par celui-ci, pouvant être actionnée par la pression régnant dans le récipient de collecte et dont l'entraînement par la pression délimite, sur le côté extérieur, le plus grand par la surface, une chambre (18) remplie de gaz, tandis qu'un conduit de pression sert à relier la partie supérieure, constamment remplie de gaz, du récipient de collecte avec la chambre afin de produire la pression de fermeture de la vanne de décharge, et il est prévu une valve à trois voies (31), pouvant être commandée pour l'ouverture de la vanne de décharge et servant de valve d'aération pour la chambre, caractérisé par:

(a) des capteurs (12, 13, 14) servant d'appareils de mesure de niveau de remplissage, qui produisent des signaux électroniques de commande et qui sont placés en positions fixes dans le récipient de collecte (1);

(b) une unité électronique de commande (29) reliée aux capteurs en vue de la commande de la valve d'aération, qui est agencée sous la forme d'une électrovalve à trois voies (31); et

(c) la disposition de la vanne de décharge (19), pourvue d'un entraînement à membrane, dans une zone supérieure d'une paroi latérale du récipient de collecte (1) et d'une colonne montante (32) ouverte en bas et par l'intermédiaire de laquelle la vanne de décharge est reliée avec la zone inférieure du récipient de collecte (1); ou

(d) la disposition de la vanne de décharge (19), pourvue d'un entraînement à membrane, à la partie inférieure (4) du récipient de collecte (1), et sa liaison, par l'intermédiaire d'un orifice de décharge (7) prévu dans le fond de la partie inférieure (4), avec la zone inférieure du récipient de collecte (1).

2. Dispositif selon la revendication 1, caractérisé en ce que les capteurs (12, 13) pénètrent par le haut dans le récipient de collecte (1).

3. Dispositif selon la revendication 2, caractérisé en ce qu'il comporte deux capteurs (12 et 13) pénétrant à des profondeurs différentes dans le récipient de collecte (1).

4. Dispositif selon l'une des revendications 1 à 3, caractérisé en ce que chaque capteur (12, 13) est relié à un amplificateur et est combiné avec un circuit de retardement qui ferme à nouveau, au bout d'un intervalle de temps prédéterminé, la vanne de décharge (19) ouverte par le signal de commande.

5. Dispositif selon la revendication 4, caractérisé en ce que la durée de retardement établi par le circuit de retardement est réglable.

6. Dispositif selon l'une des revendications 1 à 5, caractérisé en ce qu'un capteur (14) est un capteur d'alarme fonctionnant électroniquement, qui déclenche un signal d'alarme lors d'un contact avec le liquide montant dans le récipient de collecte (1) et qui provoque une ouverture de la vanne de décharge (19).

7. Dispositif selon l'une des revendications 1 à 6, caractérisé en ce que les capteurs (12, 13, 14) produisent des signaux de commande ou d'alarme par effet capacitif.

8. Dispositif selon l'une des revendications 1 à 6, caractérisé en ce que les capteurs (12, 13, 14) produisent des signaux de commande ou d'alarme par conductivité électronique du condensat collecté.

9. Dispositif selon l'une des revendications 1 à 8, caractérisé en ce qu'il est prévu dans le récipient de collecte (1) une tôle de recouvrement (24) devant l'orifice de décharge (17) menant à la vanne de décharge (19).

FIG.1

FIG. 2